Europäisches Patentamt

European Patent Office

Office européen des brevets

(11) Publication number: **0 426 255 A2**

## EUROPEAN PATENT APPLICATION

(21) Application number: 90202875.2

(51) Int. Cl.5: **C09C 1/42**

(22) Date of filing: 30.10.90

(30) Priority: 03.11.89 IT 222530

(43) Date of publication of application:
08.05.91 Bulletin 91/19

(84) Designated Contracting States:
AT BE CH DE DK ES FR GB GR LI LU NL SE

(71) Applicant: ENIRICERCHE S.p.A.
Corso Venezia 16
I-20121 Milan(IT)

(72) Inventor: Miano, Fausto
Via Trapani 6
I-94100 Enna(IT)
Inventor: Borgarello, Enrico
Corso Grosseto 274
I-10151 Torino(IT)

(74) Representative: Roggero, Sergio et al
Ing. Barzanò & Zanardo Milano S.p.A. Via
Borgonuovo 10 .
I-20121 Milano(IT)

(54) **Organophilic clay and process for preparing it.**

(57) A process for producing an organophilic clay comprises:

(a) milling and refining a raw clay selected from the group of smectite clays in order to obtain a milled and refined clay;

(b) replacing the exchangeable cations of the refined clay with sodium or ammonium cations, by means of a cation-exchange treatment;

(c) contacting the cation-exchanged clay with a sulfonated condensed-ring polycyclic aromatic compound in order to obtain an organophilic clay; and

(d) recovering the organophilic clay from the products obtained from the preceding (c) step.

The so obtained organophilic clay is particularly useful as a thixotropic agent in organic vehicles, in particular in oil-base drilling muds.

EP 0 426 255 A2

EP 0 426 255 A2

## ORGANOPHILIC CLAY AND PROCESS FOR PREPARING IT

The present invention is concerned with an organophilic clay, the process for preparing said organophilic clay and the use of said clay as a thixotropic agent.

Organophilic clays are known in the art, which are derived from a clay ore, generally belonging to the group of smectite, by replacing the ion-exchangeable inorganic cations contained in said clay with a quaternary ammonium compound containing at least one long-chain alkyl group capable of giving hydrophobic characteristics to the surface of the so treated clay. The organophilic clays are used in various sectors as thixotropic agents. For greater information on this prior art, reference is made to the specifications of U.S. patents 2,531,427; 2,531,812; 2,996,506; 3,537,994; 3,974,125; 4,081,496 and 4,116,866.

The present Applicant has found now according to the present invention that an organophilic clay endowed with good thixotropic characteristics can be prepared by treating a refined clay with a sulfonated condensed-ring polycyclic aromatic compound, after a preliminary cation-exchange of the same clay with sodium or ammonium compounds.

In accordance therewith, in a first aspect thereof, the present invention is concerned with the preparation of an organophilic clay by means of a process characterized by the following steps:

(a) milling and refining a raw clay belonging to the group of smectite in order to obtain a milled and refined clay;

(b) replacing the exchangeable cations of the refined clay with sodium or ammonium cations, by means of a cation-exchange treatment;

(c) contacting the cation-exchanged clay with a sulfonated condensed-ring polycyclic aromatic compound in order to obtain an organophilic clay; and

(d) recovering the organophilic clay from the products obtained from the preceding (c) step.

The clays which are submitted to the process according to the present invention are advantageously selected from among the clays belonging to the group of smectite. Examples thereof are bentonites, such as Wyoming bentonite, montmorillonites, hectorite, saponite, and the like.

### (a) step

According to the process of the present invention, the raw clay is first submitted to milling and refining treatments in order to produce a milled, refined clay.

More particularly, the (a) step can be carried out by first submitting the clay to a wet milling, e.g., in a blender, or to a dry milling, e.g. in a ball mill, with the treatment being continued until solid particles are obtained whose size is smaller than approximately 125 micrometres. The milled clay is then dispersed in water, and an oxidating agent is then added to the dispersion in order to eliminate the organic contaminants, in particular bacteria. This treatment is advantageously carried out by using hydrogen peroxide as the oxidating agent and operating at relatively high temperatures, e.g. at temperatures of the order of 80°C.

The resulting dispersion is then submitted to separation treatments in order to remove the components different from clay, in particular the abrasive components, such as sand. This separation is carried out in the most advtantageous way by centrifugation.

### (b) step

In the (b) step of the process according to the present invention, the exchangeable cations contained in the refined clay are replaced by sodium or ammonium cations, by means of a cation-exchange treatment. For that purpose, refined clay is sequentially put into contact with a base and a salt of the cation which one wants to exchange. More particularly, the centrifuged clay coming from the preceding (a) step is dispersed in an aqueous solution of sodium or ammonium hydroxide. The operation is advantageously carried out with a concentration of solids of the order of 5% by weight. For that purpose, aqueous sodium or ammonium hydroxides at a concentration comprised within the range of from 0.01 to 1.0 N are used, with the pH value of the medium being of approximately 9-9.5. The dispersion is then centrifuged and the separated solids are dispersed again, to concentrations of from 0.01 to 4% by weight, in an aqueous solution of a salt, preferably a salt respectively constituted by sodium or ammonium chloride. These treatments are repeated until in the supernatant the concentration of calcium ions decreses down to about 10 mg/l, and the

2

concentration of aluminum ions decreases to about 1 mg/l, for a concentration of clay in the dispersion of the order of 1% by weight. The particles obtained after the cation-exchange treatments advantageously have a particle size comprised within the range of from 1 to 3 micrometres. The above described cation-exchange operations can be accelerated by operating in an ultrasound bath (sonication). A further advantage of the use of sonication is that the size of the particles is further reduced. At the end of the treatments, the exchanged clay is recovered, e.g., by centrifugation, and is submitted to washing. The washing is carried out by dispersing the clay in demineralized water until the conductivity of the aqueous phase decreases to values lower than 100-200 microSiemens/cm.

### (c) step

In the (c) step of the process according to the instant invention, the cation-exchanged clay is contacted with a sulfonated condensed-ring polycyclic aromatic compound in order to obtain an organophilic clay.

By "sulfonated condensed-ring polycyclic aromatic compound" those products are meant, which are obtained by means of the sulfonation of naphthalene, anthracene, phenanthrene or other condensed-ring polycyclic hydrocarbons possibly substituted with one or more short-chain alkyl groups, for instance with alkyl groups with from 1 to 4 carbon atoms in their chain.

For the purposes of the present invention, those products are also useful, which are obtained from the sulfonation of hydrocarbon mixtures constituted by, or containing, condensed-ring polycyclic aromatic compounds, such as, e.g., those deriving from the reaction between sulfur trioxide and steam-cracking fuel oil. The latter is the residual hydrocarbonaceous fraction deriving from the processes for the production of ethylene and other lower olefins by means of the thermal cracking of naphthas and gas oils. Such a hydrocarbonaceous fraction shows a high content of aromatic compounds, and at least 50% by weight of the latter are condensed-ring bicyclic or polycyclic aromatic compounds (the evalution is carried out according to ASTM D-3239-81). The sulfonates of fuel oil from steam cracking, and the process for preparing them are disclosed, e.g., in European patent application publ. N. 233,951. Finally, the products deriving from the condensation of formaldehyde and sulfonated condensed-ring polycyclic aromatic compounds, e.g., the products of condensation of formaldehyde with naphthalene-sulfonic acid, as disclosed in U.S. patent N. 3,277,162, are useful as well for the purposes according to the present invention.

In practice, the sulfonated organic compounds useful for the purposes according to the present invention are water-soluble sulfonated condensed-ring polycyclic aromatic compounds having molecular weights higher than 200 and of up to about 3,000. They can be used either as individual chemical species or as mixtures, in the form of the free sulfonic acids, or in their salt form, e.g., in the form of their an alkali-metal or ammonium salts.

According to the process of the present invention, the cation-exchanged clay obtained from the preceding (b) step is suspended in water up to a solids content comprised within the range of from 0.5 to 5.0% by weight and to such a suspension an aqueous solution of the sulfonated organic compound is added. Advantageously, the addition of the sulfonated organic compound is monitored by means of the UVP (Ultrasound Vibration Potential) method, which correlates the degree of covering of clay surface with the added amount of sulfonated organic compound.

The present Applicant thinks that the interaction between the sulfonated organic compound and the cation-exchanged clay takes place at the sites of the same clay which are charged with positive charges, positioned at the corners of the particles. The negative charges on the surface of clay are shielded by the presence of the sulfonated organic compound. In practice, the treatment with the organic sulfonated compound is continued until the surface charges of clay are partially or totally neutralized (shielded). In particular, from 40% to 100% of said initial charges are neutralized (shielded). Amounts of sulfonated organic compounds larger than the necessary amount to totally neutralize (shield) the surface charges are undesired, in that they tend to decrease the thixotropic characteristics of produced organophilic clay.

One should finally observe that the behaviour of the sulfonated condensed-ring polycyclic aromatic compounds in endowing clay with organophilic features is unique, and that similar effects are not obtained with other sulfonates, such as the alkyl-aryl-sulfonates, such as, e.g., dodecyl-benzenesulfonate.

### (d) step

The organophilic clay obtained in preceding (c) step can be recovered and dehydrated, e.g., by freeze-drying.

According to a further aspect thereof, the present invention relates to an organophilic clay constituted by a smectite clay refined and cation-exchanged with sodium or ammonium ions, in the form of particles of from 1 to 3 micrometres of size, bearing at its surface a sulfonated condensed-ring polycyclic aromatic compound in such an amount as to neutralize (shield) from 40% to 100% of the total surface charges of the same clay.

The organophilic clay according to the present invention is useful as a thixotropic agent in organic vehicles, such as, e.g., in lubricating greases, paints and lacquers, enamels, oil-based printing oils and, above all, in oil-based drilling fluids.

In the following experimental example, which is reported in order to better illustrate the present invention, a smectite clay from Wyoming supplied by Georgia Clay is used. The clay is milled, refined and cation-exchanged with ammonium ions by operating according to as reported in the preceding disclosure.

Furthermore, as the sulfonated condensed-ring polycyclic aromatic compound, the product is used which is obtained by sulfonating with sulfur trioxide a fuel oil from steam cracking having the following characteristics:

* specific gravity (at 15°C) : 1.075 g/ml
* viscosity (at 50°C) : 23.8 cSt
* elemental analysis (% by weight): C = 92.4; H = 6.7; S = 0.1; N = <0.3
* water content (by Karl Fischer) : 0.2% by weight
* chromatographic separation : saturated compounds: 2.6%
polar compounds : 13.7%
aromatic compounds : 78.6%
(all percentages are by weight)

This oil is sulfonated with sulfur trioxide. The sulfonation is carried out with a weight ratio of sulfur trioxide to oil of 0. 66/1, by operating according to the process disclosed in European patent application publ. N. 233,951. A sulfonated condensed-ring polycyclic aromatic compound in the acid state is eventually obtained which contains about 95% by weight of sulfonated organic matter and has a molecular weight of about 470. This organic sulfonate is used in the acid form to coat the clay.

## Example

An acqueous solution containing 7.8% by weight of the above said organic sulfonate in its acid form is gradually added to 200 ml of a dispersion at 1.1% by weight of clay in ammonium form as above disclosed (particle size approximately 2 micrometres). The mixing process is carried out at room temperature, with the surface charges of clay being monitored by means of UVP measuring instrument.

Three tests are carried out, and namely:
* A test [(a) test] with an amount of sulfonated organic compound equal to the necessary amount in order to completely neutralize (shield) the surface charges of clay;
* A test [(b) test] with an amount of sulfonated organic compound equal to 50% of the required amount to completely neutralize (shield) the surface charges of clay; and
* A test (c)(comparison test) with an amount of sulfonated organic compound equivalent to three times the required amount to completely neutralize (shield) the surface charges.

The organophilic clays obtained from the three tests are freeze-dried and each of them is dispersed in a gas oil from the market, to a concentration of 1.0% by weight. The volume of settled clay after a 24-hour stay in graduated cylinders of 25 ml of capacity is measured.
The following results are obtained:
* (a) test: settled clay volume: 2.8 ml;
* (b) test: settled clay volume: 0.8 ml;
* (c) test: settled clay volume: 1.4 ml.

Under the same conditions, the volume of sediment obtained with a clay not treated with the sulfonated compound is of 0.1 ml. The dispersions in gas oil of the treated samples are stable for some weeks. However, the redispersion of the sediment shows to be very good for (a) and (b) tests, and is difficult for the (c) test and the non-treated sample.

Furthermore, the stability is measured of a water-in-oil emulsion containing 85% by weight of oil and 15% by weight of water, in the absence of an organophilic clay and in the presence of 3% by weight of the organophilic clay from (a) test.

In particular, the stability of the emulsion is measured by means of the application of an electrical

4

voltage between two electrodes kept immersed in the emulsion, operating according to the procedures standardized by American Petroleum Institute (Procedure RP 13B: Standard Procedure For Field Testing Drilling Fluids). In the case of the emulsion without the organophilic clay, the breakage of the emulsion occurs at V = 60 volts. In the case of the emulsion with 3% by weight of the organophilic clay from (a) test, the breakage of the emulsion takes place at V = 115 V.

A dispersion at 3% by weight of the organophilic clay from the (a) test in gas oil is prepared by a 10-minute stirring of the mixture. The rheological characteristics observed on the dispersion, as compared to those of pristine gas oil, are reported in the following table. Also in this case, the measurements are carried out by means of the procedures standardized by American Petroleum Institute.

|  | Plastic viscosity (mPa.s) | Yield point (Pa) | Gel after 10 minutes (Pa) |
|---|---|---|---|
| Gas oil | 3 | 1 | 1 |
| Dispersion | 8 | 1 | 3 |

## Claims

1. Process for preparing an organophilic clay characterized by the following steps:
   (a) milling and refining a raw clay belonging to the group of smectite in order to obtain a milled and refined clay;
   (b) replacing the exchangeable cations of the refined clay with sodium or ammonium cations, by means of a cation-exchange treatment;
   (c) contacting the cation-exchanged clay with a sulfonated condensed-ring polycyclic aromatic compound in order to obtain an organophilic clay; and
   (d) recovering the organophilic clay from the products obtained from the preceding (c) step.

2. Process according to claim 1, characterized in that the clay belonging to smectite group is selected from among bentonites, such as Wyoming bentonite, montmorillonites, hectorite and saponite.

3. Process according to claim 1, characterized in that in the (a) step the raw clay is firstly submitted to a dry or wet milling until the size of the milled particles is smaller than approximately 125 micrometres, the milled clay is then dispersed in water and is treated with an oxidating agent until the organic impurities are eliminated and the resulting dispersion is eventually submitted to treatments for removing the components different from clay.

4. Process according to claim 3, characterized in that said oxidating treatment is carried out with hydrogen peroxide at a temperature of the order of 80° C.

5. Process according to claim 3, characterized in that said separation of the components different from clay is carried out by means of the centrifugation of the dispersion.

6. Process according to claim 1, characterized in that in the (b) step the milled and refined clay is contacted, in sequence, with a hydroxide and a salt of sodium or ammonium, preferably sodium or ammonium chloride, by operating with the particles being kept suspended in an aqueous vehicle until the concentration of calcium ions in the supernatant decreases down to about 10 mg/l and the concentration of aluminum ions in the supernatant decreases down to about 1 mg/l for a concentration of clay in the dispersion of the order of about 1% by weight.

7. Process according to claim 6, characterized in that said exchange reactions are carried out in an ultrasound bath.

8. Process according to claim 1, characterized in that the sulfonated condensed-ring polycyclic aromatic compounds used in the (c) step are water-soluble compounds having a molecular weight higher than about 200 and of up to about 3,000, obtained by means of the sulfonation of naphthalene, anthracene, phenanthrene or other condensed-ring polycyclic hydrocarbons possibly substituted with one or more short-chain alkyl groups, or the products from the sulfonation of hydrocarbon mixtures constituted by, or containing, condensed-ring polycyclic aromatic compounds, in particular those deriving from the reaction between sulfur trioxide and steam-cracking fuel oil, as free sulfonic acids or as their alkali-metal or ammonium salts, including the condensation products obtained from said sulfonated compounds and formaldehyde.

9. Process according to claim 1, characterized in that in the (c) step the cation-exchanged clay is suspended in water up to a solid-matter content of from 0.5 to 5.0% by weight and the sulfonated organic compound in aqueous solution is added to the suspension until the surface charges of clay are partially or totally neutralized (shielded).

10. Process according to claim 9, characterized in that from 40% to 100% of said surface charges of clay are neutralized.

11. Process according to claim 1, characterized in that the organophilic clay recovered in the (d) step is dehydrated by freeze-drying.

12. Organophilic clay, constituted by a smectite clay refined and cation-exchanged with sodium, potassium or ammonium ions, in the form of particles of from 1 to 3 micrometres of size, bearing at its surface a sulfonated condensed-ring polycyclic aromatic compound in such an amount as to neutralize (shield) from 40 to 100% of the surface charges of the same clay.

13. Use of the organophilic clay according to claim 12 as a thixotropic agent in organic vehicles, in particular in lubricating greases, paints, lacquers, enamels, oil-based printing inks and oil-based drilling fluids.